Europäisches Patentamt

European Patent Office

Office européen des brevets

(19)

(11) **EP 0 515 740 B1**

(12) # EUROPEAN PATENT SPECIFICATION

(45) Date of publication and mention
of the grant of the patent:
**26.11.1997 Bulletin 1997/48**

(51) Int Cl.[6]: **C08J 3/09**
// C08L75/04

(21) Application number: **91201340.6**

(22) Date of filing: **31.05.1991**

(54) **Process for producing textile products coated with a polyurethane elastomer**

Verfahren zur Herstellung von mit Polyurethanelastomer beschichteten Textilprodukten

Procédé pour la préparation de produits textiles ayant un revêtement d'élastomère de polyuréthane

(84) Designated Contracting States:
**BE CH DE FR GB IT LI NL SE**

(43) Date of publication of application:
**02.12.1992 Bulletin 1992/49**

(73) Proprietor: **MITSUBISHI JUKOGYO KABUSHIKI KAISHA**
**Tokyo 100 (JP)**

(72) Inventor: **Hayashi, Shunichi,**
**c/o Nagoya Technical Institute**
**Nakamura-ku, Nagoya, Aichi Pref. (JP)**

(74) Representative: **Hoijtink, Reinoud et al**
**Arnold & Siedsma,**
**Advocaten en Octrooigemachtigden,**
**Sweelinckplein 1**
**2517 GK Den Haag (NL)**

(56) References cited:
**EP-A- 0 363 919**

• **WORLD PATENTS INDEX LATEST, Derwent Publications Ltd., London, GB; AN 91-040701 (06) & JP-A-2 307 975**
• **WORLD PATENTS INDEX LATEST, Derwent Publications Ltd., London, GB ; AN 81-74619D (41) & JP-A-56 107 076**

**Description**

FIELD OF THE INVENTION AND RELATED ART STATEMENT

The present invention relates to a process for producing a textile product having controllable air passage properties by coating said textile product with a solution of a polyurethane elastomer which, in particular, exhibits a glassy region within the temperature range of its practical use, and to applications of such solution.

For producing films and for preparing coated layers on substrates, solutions of polyurethane elastomers having a glass transition temperature (represented hereinafter by Tg) considerably lower than the temperature of their practical use, say -40 °C, have heretofore been employed. Films, such as, synthetic leathers etc., and coating layers, such as, water-repellant coating for umbrella etc., prepared from solutions of polyurethane elastomers have been assigned for use at temperatures at which the elastomers are within the region of their rubbery elasticity.

JP-A-02/307975 discloses the use of a shape memory resin on fabric in order to eliminate wrinkles and creases. The shape memory temperature is 100°C and the shape recovery temperature 10-55°C. An example of the shape recovery resin is polyurethane resin. The document does not disclose any particulars as to the specific composition of the resin or to other applications thereof.

Thus, there have been proposed no product of polyurethane elastomer in a form of a solution for producing films and coated layers to be served for practical use at temperatures in such a range that covers both the glassy and the elastic regions of the elastomer. This means that it has not been able to utilize a film or coated layer prepared from a polyurethane elastomer solution for an article having controllable air passage properties.

OBJECT AND SUMMARY OF THE INVENTION

The object of the present invention is to provide a solution of a polyurethane elastomer for producing films and coated layers which can be used at temperatures covering not only the elastic region but also the glassy region of the elastomer.

Thus, one aspect of the present invention resides in a process as described in claim 1.

Another aspect of the present invention consists in applications of such polyurethane elastomer solution.

According to the present invention,- a polyurethane elastomer which has not ever been utilized in its glassy region is now brought to practical use in a form of a solution adapted to be applied on various substrates for preparing coated products or for producing film products. Such coated products and film products will be possessed of a unique property of memorizing their original form or their original elasticity and can be utilized as shape memory elements or elasticity memory elements.

DETAILED DESCRIPTION OF PREFERRED EMBODIMENTS

The polyurethane elastomer to be employed as the solute in the solution according to the present invention is produced from three essential components consisting of a bifunctional diisocyanate, a polyol with a functionality of two, i.e. diol, and a bifunctional chain extending agent having active hydrogen atoms, by polymerizing them in a mole ratio of diisocyanate/diol/chain extender of 2.00 - 1.10/1.00/1.00 - 0.10, preferably 1.80 - 1.20/1.00/0.80 - 0.20, via the prepolymer process or the so-called one-shot extrusion process. The resulting elastomeric polymer molecules have residual terminal free groups of NCO and OH in a nearly equivalent amount and the polymer, which has a Tg distributed over the range of -50 to +60 °C and a crystallinity in the range of 3 to 50 % by weight, exhibits superior moldability and is adapted to use in film-forming applications.

Since this polyurethane elastomer has substantially no excess NCO terminal groups, formation of allophanate bond attributive to rigid cross linking is avoided, so that it remains as a linear plastic polymer with high freedom of workability. By providing it with an adequate crystallinity, a requisite elasticity of the elastomer is obtained.

Thus, the crystallinity of the polyurethane elastomer according to the present invention may preferably be in the range from 3 to 50 % by weight. If the crystallinity of the elastomer is short of 3 % by weight, the rubbery elasticity thereof will be too low at temperatures above the Tg thereof, whereas it becomes high at such temperatures if the crystallinity exceeds over 50 % by weight, resulting in a low ratio of elasticities between the temperatures about 10 °C above and below the Tg.

While there is no special limitation as to the concrete compound for each of the essential components, practical raw materials therefor are exemplified below.

As to the bifunctional isocyanate, which has a molecular structure represented by the general formula OCN-R-NCO, a wide variety of compounds with or without phenyl rings in the alkyl moiety R can be employed, such as for example, toluene 2,4-diisocianate, 4,4'-diphenylmethane diisocyanate, carbodiimide-modified 4,4'-diphenylmethane diisocyanate and hexamethylene diisocyanate.

As to the bifunctinal polyol, namely, diol, which has a molecular structure represented by the general formula HO-R'-OH, various products are found in the market, such as those having one or two phenyl rings in the alkyl moiety R', those having no phenyl ring and those modified by reacting them with bifunctional carboxylic acids or with cyclic ethers. Concrete examples include polypropylene glycol, 1,4-butane glycol adipate, polytetramethylene glycol, polyethylene glycol, bisphenol A with addition of propylene oxide and so on.

As for the bifunctional chain extender having active hydrogen atoms, which has a molecular structure represented by the general formula HO-R''-OH, those having polymethylene group $-(CH_2)_n-$ in the alkyl moiety R'' and those having one or two phenyl rings in the alkyl moiety are available. Concretely, there may be exemplified ethylene glycol, 1,4-butanediol, bis(2-hydroxyethyl)-hydroquinone, bisphenol A with addition of propylene oxide and so on.

For producing the polyurethane elastomer according to the present invetion from the starting materials described above, it is possible to employ either of the known techniques of bulk polymerization and solution polymerization. It is possible to employ a one-shot process in which the three components are subjected to polymerization reaction simultaneously. It is also possible to employ a prepolymer process in which a prepolymer is first prepared from the isocyanate component and the polyol component whereupon a chain extension is effected by introducing the chain extender into the prepolymer. The thus obtained polyurethane elastomer has a molecular structure represented by the general formula

$$HOR''OCONH(RNHCOOR'OCONH)_n RNHCOOR''OCONH-$$

$$(RNHCOOR'OCONH)_m RNHCOOR''OH$$

wherein m and n are each a numeral of 1 - 16 and 0 - 16 respectively.

Below, the concrete manner of production of the polyurethane elastomer according to the present invention is described by way of Examples.

<u>Examples 1 to 32</u>

A polyurethane elastomer was produced by the prepolymer process. The starting compounds for the isocyanate component and for the polyol component as specified in Table 1 were blended in a mole proportion as given also in the Table. This mixture was subjected to a reaction without catalyst to produce a prepolymer. To the so obtained prepolymer, there was added the chain extender specified in Table 1 in a mole proportion as given in Table 1 and the mixture was heated so as to cause curing of the prepolymer by the reaction with the chain extender, whereby a polyurethane elastomer was obtained, of which fundamental properties are given in Table 1.

In Table 1, Tg means the glass transition temperature (°C ) of the elastomer and E/E' represents the ratio of the tensile elasticity at the temperature 10°C lower than the Tg versus the tensile elasticity at the temperature 10°C higher than the Tg. Tg was determined by DSC method using a differential scanning calorimeter. The crystallinity in weight % was determined by X-ray diffraction.

The solution according to the present invention can easily be obtained by dissolving the polyurethane elastomer prepared as above in a suitable solvent, such as, dimethylformamide (DMF), methyl ethyl ketone (MEK), methyl isobutyl ketone or so on. The solvent should be volatile, in order to leave the polyurethane elastomer as the coated layer on the substrate after the solvent has been evaporated off.

The so prepared polyurethane elastomer solution can be coated on various substrates, such as, textiles, parting paper and so on. By volatilizing off the solvent, a coated layer of the polyurethane elastomer is left on the substrate. When a parting paper is coated with the polyurethane elastomer solution, a film of the polyurethane elastomer can be obtained by exfoliating the coated layer from the parting paper.

The resulting coated layer of the polyurethane elastomer exhibits a large change in the elasticity at temperatures above and below the Tg of the elastomer, so that it is possible to alter the consistency or nature of the coated product by passing the Tg upon change of the ambient temperature due to the distinct change in the elasticity of the coated layer. Thus, the substrate material, such as, cloth, sheet, paper and so on will be utilized as a so-called elasticity memory material by coating with the polyurethane elastomer solution according to the present invention.

It is possible to let a material coated with the solution of the polyurethane elastomer according to the present invention memorize the original shape, such as, plane, folded or bent configuration, as the primary shape of the material and then impress an additional shape as the secondary shape, such as, folds, wrinkle, twist etc., onto the material at a temperature above the Tg but below the shaping temperature of the original shape followed by cooling of the material while maintaining this secondary shape to a temperature below the Tg, in order to set the secondary shape, whereupon the so treated material is heated to a temperature above the Tg to recover the primary shape so as to use it as a shape memory material.

In this aspect of application, the polyurethane elastomer solution according to the present invention is highly convenient for producing the primary shape.

It has been found that a unique textile product is obtained when a textile cloth made of a synthetic fiber, such as polyamide, polyester etc., is treated by the polyurethane elastomer solution according to the present invention to effect coating of the fiber with the polyurethane elastomer in a thickness of about 10 - 30 μm. The so treated cloth will function in such a manner, that a better heat preservation is attained at temperatures below the Tg of the polyurethane elastomer, while a better air permeability is realized at temperatures above the Tg. By adjusting the Tg of the polyurethane elastomer by choosing the condition of preparation of the polyurethane elastomer, textile products exhibiting optimum function of heat retention at lower temperatures and air permeability at higher temperatures for apparel use can be realized.

Table 1
Mole Composition of Starting Materials and Material Property of the  resulting Polyurethane Elastomer

| Starting Material | | Example No. | | | | | | | |
|---|---|---|---|---|---|---|---|---|---|
| | | 1 | 2 | 3 | 4 | 5 | 6 | 7 | 8 |
| Diisocyanate:                        Mol. Wt. = | | | | | | | | | |
| Toluene 2,4-diisocyanate | 174 | 1.5 | | | | | | | |
| 4,4'-Diphenylmethane diisocyanate | 250 | | | | 1.5 | | 1.5 | 1.5 | 1.5 |
| 4,4'-Diphenylmethane diisocyanate (carbimide-modified) | 290 | | | | | 1.5 | | | |
| do. | 303 | | 1.5 | 1.5 | | | | | |
| Hexamethylene diisocyanate | 168 | | | | | | | | |
| Polyol:                              Mol. Wt. = | | | | | | | | | |
| Polypropylene glycol | 400 | | | | | | | | |
| do. | 700 | | | 1.0 | 1.0 | 1.0 | 1.0 | 1.0 | 1.0 |
| do. | 1,000 | | 0.88 | | | | | | |
| 1,4-Butanediol adipate | 600 | | | | | | | | |
| do. | 1,000 | | | | | | | | |
| do. | 2,000 | | | | | | | | |
| Polytetramethylene glycol | 650 | | | | | | | | |
| do. | 850 | | | | | | | | |
| do. | 1,000 | | | | | | | | |
| Polyethylene glycol | 600 | | | | | | | | |
| Bisphenol A + propylene oxide | 800 | 1.0 | | | | | | | |
| Chain extender:                      Mol. Wt. = | | | | | | | | | |
| Ethylene glycol | 62 | | | | | | 0.51 | | |
| 1,4-Butanediol | 90 | 0.51 | | | | | | 0.51 | |
| Bis(2-hydroxyethyl)-hydroquinone | 198 | | | | | | | | |
| Bisphenol A + ethylene oxide | 327 | | | | | | | | |
| do. | 360 | | 0.51 | 0.51 | 0.51 | 0.51 | | | |
| Bisphenol A + propylene oxide | 360 | | | | | | | | 0.51 |
| Material Property: | | | | | | | | | |
| Tg (°C) | | 24 | -10 | 15 | 14 | 16 | 9 | 6 | 12 |
| E/E' | | 170 | 73 | 69 | 129 | 133 | 117 | 128 | 97 |
| Crystallinity (% by weight) | | | 20 | 20 | | | | | |

EP 0 515 740 B1

Table 1 (cont.)
Mole Composition of Starting Materials and Material Property of the resulting Polyurethane Elastomer

| Starting Material | | Example No. | | | | | | | |
|---|---|---|---|---|---|---|---|---|---|
| | | 9 | 10 | 11 | 12 | 13 | 14 | 15 | 16 |
| Diisocyanate: | Mol. Wt.= | | | | | | | | |
| Toluene 2.4-diisocyanate | 174 | | | | | | | | |
| 4.4'-Diphenylmethane diisocyanate | 250 | 1.5 | 1.5 | 1.5 | 1.2 | 1.8 | 1.35 | 1.35 | 1.5 |
| 4.4'-Diphenylmethane diisocyanate (carbimide-modified) | 290 | | | | | | | | |
| do. | 303 | | | | | | | | |
| Hexamethylene diisocyanate | 168 | | | | | | | | |
| Polyol: | Mol. Wt.= | | | | | | | | |
| Polypropylene glycol | 400 | | | | | | | | |
| do. | 700 | 1.0 | 1.0 | | 1.0 | 1.0 | 1.0 | | 1.0 |
| do. | 1,000 | | | | | | | | |
| 1,4-Butanediol adipate | 600 | | | | | | | 1.0 | |
| do. | 1,000 | | | | | | | | |
| do. | 2,000 | | | | | | | | |
| Polytetramethylene glycol | 650 | | | | | | | | |
| do. | 850 | | | | | | | | |
| do. | 1,000 | | | | | | | | |
| Polyethylene glycol | 600 | | | 1.0 | | | | | |
| Bisphenol A + propylene oxide | 800 | | | | | | | | |
| Chain extender: | Mol. Wt.= | | | | | | | | |
| Ethylene glycol | 62 | | | | | | | | |
| 1,4-Butanediol | 90 | | | | | | | | |
| Bis(2-hydroxyethyl)-hydroquinone | 198 | | 0.51 | | | | | | |
| Bisphenol A + ethylene oxide | 327 | 0.51 | | | 0.21 | 0.81 | 0.36 | 0.36 | 0.43 |
| do. | 360 | | | | | | | | |
| Bisphenol A + propylene oxide | 360 | | | | | | | | |
| Material Property: | | | | | | | | | |
| Tg (°C) | | 16 | -7 | -6 | -4 | 25 | 5 | 10 | 5 |
| E/E' | | 111 | 49 | 12 | 105 | 53 | 37 | 100 | 33 |
| Crystallinity (% by weight) | | | 20 | 30 | | 20 | 25 | | 25 |

Table 1 (cont.)
Mole Composition of Starting Materials and Material Property of the resulting Polyurethane Elastomer

| Starting Material | | Example No. | | | | | | | |
|---|---|---|---|---|---|---|---|---|---|
| | | 17 | 18 | 19 | 20 | 21 | 22 | 23 | 24 |
| Diisocyanate: | Mol. Wt.= | | | | | | | | |
| Toluene 2,4-diisocyanate | 174 | | | 1.5 | 1.4 | 1.3 | 1.2 | | |
| 4,4'-Diphenylmethane diisocyanate | 250 | 1.5 | 1.35 | | | | | 1.59 | 1.68 |
| 4,4'-Diphenylmethane diisocyanate (carbimide-modified) | 290 | | | | | | | | |
| do. | 303 | | | | | | | | |
| Hexamethylene diisocyanate | 168 | | | | | | | | |
| Polyol: | Mol. Wt.= | | | | | | | | |
| Polypropylene glycol | 400 | | 1.0 | | | | | | |
| do. | 700 | 1.0 | | | | | | 1.0 | 1.0 |
| do. | 1,000 | | | | | | | | |
| 1,4-Butanediol adipate | 600 | | | | | | | | |
| do. | 1,000 | | | | | | | | |
| do. | 2,000 | | | | | | | | |
| Polytetramethylene glycol | 650 | | | | | | | | |
| do. | 850 | | | | | | | | |
| do. | 1,000 | | | | | | | | |
| Polyethylene glycol | 600 | | | | | | | | |
| Bisphenol A + propylene oxide | 800 | | | 1.0 | 1.0 | 1.0 | 1.0 | | |
| Chain extender: | Mol. Wt.= | | | | | | | | |
| Ethylene glycol | 62 | | | | | | | | |
| 1,4-Butanediol | 90 | | | | | | | | |
| Bis(2-hydroxyethyl)-hydroquinone | 198 | | | 0.51 | 0.41 | 0.31 | 0.21 | | |
| Bisphenol A + ethylene oxide | 327 | 0.35 | 0.36 | | | | | | |
| do. | 360 | | | | | | | 0.51 | 0.51 |
| Bisphenol A + propylene oxide | 360 | | | | | | | | |
| Material Property: | | | | | | | | | |
| Tg (°C) | | 8 | 23 | 26 | 21 | 19 | 19 | 10 | 11 |
| E/E' | | 100 | 126 | 140 | 125 | 108 | 101 | 126 | 126 |
| Crystallinity (% by weight) | | 15 | 15 | 10 | 15 | 15 | 15 | 15 | 20 |

EP 0 515 740 B1

Table 1 (cont.)
Mole Composition of Starting Materials and Material Property of the resulting Polyurethane Elastomer

| Starting Material | | Example No. | | | | | | | |
|---|---|---|---|---|---|---|---|---|---|
| | | 25 | 26 | 27 | 28 | 29 | 30 | 31 | 32 |
| Diisocyanate: | Mol. Wt.= | | | | | | | | |
| Toluene 2,4-diisocyanate | 174 | 1.5 | | | | | | | |
| 4,4'-Diphenylmethane diisocyanate | 250 | | 1.3 | 1.7 | 1.59 | 1.68 | 1.5 | 1.5 | 1.81 |
| 4,4'-Diphenylmethane diisocyanate (carbimide-modified) | 290 | | | | | | | | |
| do. | 303 | | | | | | | | |
| Hexamethylene diisocyanate | 168 | | | | | | | | |
| Polyol: | Mol. Wt.= | | | | | | | | |
| Polypropylene glycol | 400 | | | | | | | | |
| do. | 700 | | 1.0 | 1.0 | 1.0 | 1.0 | | | |
| do. | 1,000 | | | | | | | | |
| 1,4-Butanediol adipate | 600 | | | | | | | | |
| do. | 1,000 | | | | | | | | |
| do. | 2,000 | | | | | | | | |
| Polytetramethylene glycol | 650 | | | | | | | | |
| do. | 850 | | | | | | | | |
| do. | 1,000 | | | | | | | | |
| Polyethylene glycol | 600 | | | | | | | | |
| Bisphenol A + propylene oxide | 800 | 1.0 | | | | | 1.0 | 1.0 | 1.0 |
| Chain extender: | Mol. Wt.= | | | | | | | | |
| Ethylene glycol | 62 | | 0.31 | 0.71 | 0.51 | 0.51 | | | |
| 1,4-Butanediol | 90 | | | | | | 0.51 | | |
| Bis(2-hydroxyethyl)-hydroquinone | 198 | 0.51 | | | | | | 0.51 | 0.81 |
| Bisphenol A + ethylene oxide | 327 | | | | | | | | |
| do. | 360 | | | | | | | | |
| Bisphenol A + propylene oxide | 360 | | | | | | | | |
| Material Property: | | | | | | | | | |
| Tg (°C) | | 22 | 2 | 15 | 11 | 12 | 35 | 40 | 48 |
| E/E' | | 107 | 83 | 122 | 100 | 135 | 124 | 138 | 152 |
| Crystallinity (% by weight) | | 15 | 20 | 15 | 15 | 10 | 10 | 5 | 5 |

Wide variety of applications of the polyurethane elastomer solution according to the present invention are possible, as exemplarily given in Table 2 below. In the Table, also the range of Tg to be assigned for each application, the temperature range designed for the practical use of the application product and the method for treating with the polyurethane elastomer solution are recited.

Table 2

| Applications | Tg (°C) | Temp. Range (°C) | Treating Method |
|---|---|---|---|
| Sportswears (with better heat retention at cold, better sweat transpiration at warm) | 10 ~ 25 | -10 ~ +40 | Coating |
| Underwears (do.) | 25 ~ 30 | 20 ~ 40 | Coating |
| Backing cloth for shoes (do.) | 10 ~ 30 | -10 ~ +50 | Coating |
| Synthetic leather for coat, sofa, car seat cover etc. (with better shape retention, high grade hand) | 10 ~ 25 | -10 ~ +50 | Coating |
| Wrinkle treatment, e.g. pleating, in clothings | 40 ~ 60 | 5 ~ 80 | Coating |

Example 33

A polyurethane elastomer product was prepared by first producing a prepolymer using the starting materials and their mixing proportion of Example No. 27 as recited in Table 1 by conducting the reaction at 70°C under the typical condition for the production of a prepolymer for 30 minutes followed by a chain extension reaction at 70°C for 10 minutes under the typical condition therefor, whereby a polyurethane elastomer having a Tg of 26 °C was obtained. The resulting polyurethane elastomer was dissolved in dimethylformamide to prepare a solution having a content of the polyurethane elastomer of 30 % by weight. This solution had a viscosity of 5,000 mPa·s.

This polyurethane elastomer solution was coated on a parting paper to a thickness of 30 μm and the coating was dried at 120°C for 10 minutes. By exfoliating the coated layer, a film having a dry thickness of 10 μm was obtained. This film exhibited a large value of the elasticity ratio E/E' of 140 between the elasticity values at temperatures above and below the Tg of 26°C

Example 34

A polyurethane elastomer product was prepared by first producing a prepolymer using the starting materials and their mixing proportion of Example No. 27 as recited in Table 1 by conducting the reaction at 70°C under the typical condition for the production of a prepolymer for 80 minutes followed by a chain extension reaction at 80°C for 20 minutes under the typical condition therefor, whereby a polyurethane elastomer having a Tg of 26 °C was obtained. The resulting polyurethane elastomer was dissolved in dimethylformamide to prepare a solution having a content of the polyurethane elastomer of 30 % by weight. This solution had a viscosity of 100,000 mPa·s.

This polyurethane elastomer solution was coated over a textile cloth to a coating thickness of 100 μm and the cloth was dried at 120°C for 20 minutes, whereby a flat cloth having a dry coating of a thickness of about 30 μm was obtained.

This cloth was held in a desired shape with heating at about 36 °C and then was cooled to about 15°C while maintaining the shape, whereby this shape was set. When the cloth was heated thereafter again to about 36°C on requirement, the original shape before the shaping was recovered.

**Claims**

1. A process for producing a textile product having controllable air passage properties, which process comprises the steps of:

   a) preparing a shape memorizing polyurethane elastomer consisting of a bifunctional diisocyanate, a bifunctional polyol and a bifunctional chain extender containing an active hydrogen group, wherein said polyurethane elastomer has a glass transition point within the range of -50 to +60°C;
   b) dissolving said shape memorizing polyurethane elastomer in a volatile solvent;

c) coating a textile product with the resulting solution of said elastomer and solvent to the extent of 10 - 30 µm in thickness in order to obtain a textile product of which the air passage properties within the range of temperatures lower than said glass transition point are such that an excellent warmth preservation is obtained and which product is air permeable within the range of temperatures higher than said glass transition point.

2. Process as claimed in claim 1, wherein the glass transition point of the elastomer is established in part of the range of temperatures for which the textile product is in use.

3. Process as claimed in claim 1 or 2, wherein the molar ratio of diisocyanate : polyol : chain extender is 2.00 - 1.10 : 1.00 : 1.00 - 0.10.

4. Process as claimed in claim 1, 2 or 3, wherein the terminals of said elastomer contain substantially equal amounts of [NCO] and [OH].

5. Process as claimed in any one of the claims 1-4, wherein said polymerized polyurethane elastomer has a crystallinity of 3 - 50 % by weight.

6. Process as claimed in any one of the claims 1-5, wherein the volatile solvent is one selected from the group consisting of dimethyl formamide, methyl ethyl ketone and methyl isobutyl ketone.

7. Textile product having controllable air passage properties, obtainable by the process as claimed in any one of the claims 1-6.

**Patentansprüche**

1. Verfahren zur Herstellung eines Textilproduktes mit steuerbaren Luftdurchlaßeigenschaften, mit den Schritten:

   a) Zubereiten eines Polyurethanelastomers mit Formgedächtnis, bestehend aus einem bifunktionalen Diisocyanat, einem bifunktionalen Polyol und einem bifunktionalen Kettenverlängerer, der eine aktive Wasserstoffgruppe enthält, wobei das Polyurethanelastomer einen Glasübergangspunkt im Bereich von -50 bis +60°C hat;
   b) Auflösen des Polyurethanelastomers mit Formgedächtnis in einem flüchtigen Lösungsmittel;
   c) Beschichten eines Textilproduktes mit der erhaltenen Lösung des Elastomers und Lösungsmittels in einem Ausmaß von 10 bis 30 µm Dicke zum Erhalten eines Textilproduktes, dessen Luftdurchlässigkeit im Bereich von Temperaturen niedriger als der Glasübergangspunkt derart ist, daß eine sehr gute Wärmehaltung erhalten wird, und das im Bereich von Temperaturen höher als der Glasübergangspunkt luftdurchlässig ist.

2. Verfahren nach Anspruch 1,
   bei dem der Glasübergangspunkt des Elastomers in einen Teil des Temperaturbereichs gelegt ist, in dem das Textilprodukt verwendet wird.

3. Verfahren nach Anspruch 1 oder 2,
   bei dem das Molverhältnis von Isocyanat:Polyol:Kettenverlängerer 2,00-1,10:1,00:1,00-0,10 beträgt.

4. Verfahren nach Anspruch 1, 2 oder 3,
   bei dem die Endgruppen des Elastomers im wesentlichen gleiche Mengen von [NCO] und [OH] enthalten.

5. Verfahren nach einem der Ansprüche 1 bis 4,
   bei dem das polymerisierte Polyurethanelastomer eine Kristallinität von 3 bis 50 Gew% hat.

6. Verfahren nach einem der Ansprüche 1 bis 6,
   bei dem das flüchtige Lösungsmittel ausgewählt ist aus der Gruppe Dimethylformamid, Methylethylketon und Methylisobutylketon.

7. Textilprodukt mit steuerbaren Luftdurchlässigkeitseigenschaften,
   das durch das Verfahren nach einem der Ansprüche 1 bis 6 erhältlich ist.

**Revendications**

1. Procédé pour produire un produit textile ayant des propriétés réglables de passage de l'air, lequel procédé comprend les étapes consistant :

   a) à préparer un élastomère de polyuréthanne à mémoire de forme, constitué d'un diisocyanate bifonctionnel, d'un polyol bifonctionnel et d'un extendeur de chaîne bifonctionnel contenant un groupe hydrogène actif, où ledit élastomère de polyuréthanne a une température de transition vitreuse comprise dans l'intervalle de -50 à +60°C ;
   b) à dissoudre dans un solvant volatil ledit élastomère de polyuréthanne à mémoire de forme ;
   c) à enduire un produit textile de la solution obtenue dudit élastomère et dudit solvant, jusqu'à une épaisseur de 10 à 30 µm, pour donner un produit textile dont les propriétés de passage de l'air, dans l'intervalle de température inférieur à la température de transition vitreuse mentionnée ci-dessus, sont telles que l'on obtient une excellente conservation de la chaleur, le produit étant perméable à l'air dans l'intervalle de température situé au-dessus de ladite température de transition vitreuse.

2. Procédé selon la revendication 1, dans lequel la température de transition vitreuse de l'élastomère est fixée dans une partie de l'intervalle de température dans lequel est utilisé le produit textile.

3. Procédé selon la revendication 1 ou 2, dans lequel la proportion en moles diisocyanate : polyol : extendeur de chaîne est de 2,00 - 1,10 : 1,00 : 1,00 - 0,10.

4. Procédé selon la revendication 1, 2 ou 3, dans lequel les sites terminaux dudit élastomère contiennent des quantités essentiellement égales de [NCO] et de [OH].

5. Procédé selon l'une quelconque des revendications 1 à 4, dans lequel ledit élastomère de polyuréthanne polymérisé présente une cristallinité de 3 à 50 % en poids.

6. Procédé selon l'une quelconque des revendications 1 à 5, dans lequel le solvant volatil est un solvant choisi dans le groupe constitué du diméthylformamide, de la méthyléthylcétone et de la méthylisobutylcétone.

7. Produit textile présentant des propriétés réglables de passage de l'air, pouvant être obtenu par le procédé selon l'une quelconque des revendications 1 à 6.